# EUROPEAN PATENT APPLICATION

(11) **EP 1 752 327 A1**
(43) Date of publication of application: **14.02.2007**
(21) Application number: 06015444.0
(22) Date of filing: 25.07.2006
(51) Int. Cl.: B60J 11/00

(54) **Car cover**

(30) Priority: 08.08.2005 IT MN20050050
(71) Applicant: SINERGIA S.N.C. DI ROSSI LUCA & C., 46045 Marmirolo MN (IT)
(72) Inventor: Rossi, Camillo, 46045 Marmirolo MN (IT); Rossi, Luca, 46045 Marmirolo MN (IT); Rossi, Paolo, 46045 Marmirolo MN (IT)
(74) Representative: Alagem Modiano, Lara S.

(57) **Abstract**

A car cover, comprising a sheet (1) made of a material which has high impact absorption capacity and has such shape and dimensions as to cover a car, when completely open, and is provided with creases (5,6) adapted to form folding lines in order to provide a pack-like configuration of the sheet such as to allow to accommodate it in the trunk of a car, means (2,3,4) for quickly coupling the sheet to the car being further provided.

## Description

The present invention relates to a car cover.

It is known that car bodies suffer rather heavy damages if they are struck by hailstones and accordingly it is necessary to cover them when the threat of a hailstorm approaches.

Of course, installation of the covering means on the car must occur in a very short time, and this fact entails as a necessary condition the constant presence of such means on board the car.

Italian patent application MN2004A000014 by the same Applicant, discloses a device which is excellently suitable for this purpose; however, continuing study has allowed to devise a cover that is extremely simple to manufacture, can ensure effective protection of the car body on which it is installed, not only from hail but also from the sun, and can assume, in the folded condition, such small dimensions as to allow easy placement in the trunk of the car, and finally is adapted to be rapidly mounted and fixed detachably to the car.

The above aim and objects are achieved by a vehicle cover, according to the invention, characterized in that it comprises a sheet made of a material which has high impact absorption capacity and has such shape and dimensions as to cover a car when completely open, and is provided with creases adapted to define folding lines in order to achieve a pack-like configuration of said sheet such as to allow to accommodate it in the trunk of a car, means for quickly coupling said sheet to said car being further provided.

Further characteristics and advantages of the present invention will become better apparent from the description of two preferred but not exclusive embodiments thereof, illustrated by way of non-limiting example in the accompanying drawings, wherein:
Figure 1 is a perspective view of the sheet in the fully open condition;
Figure 2 is a sectional view, taken along the line II-II of Figure 1;
Figure 3 is a perspective view of the sheet applied to a car;
Figure 4 is a perspective view of the sheet in the folded condition;
Figure 5 is a sectional view of the invention according to a variation.

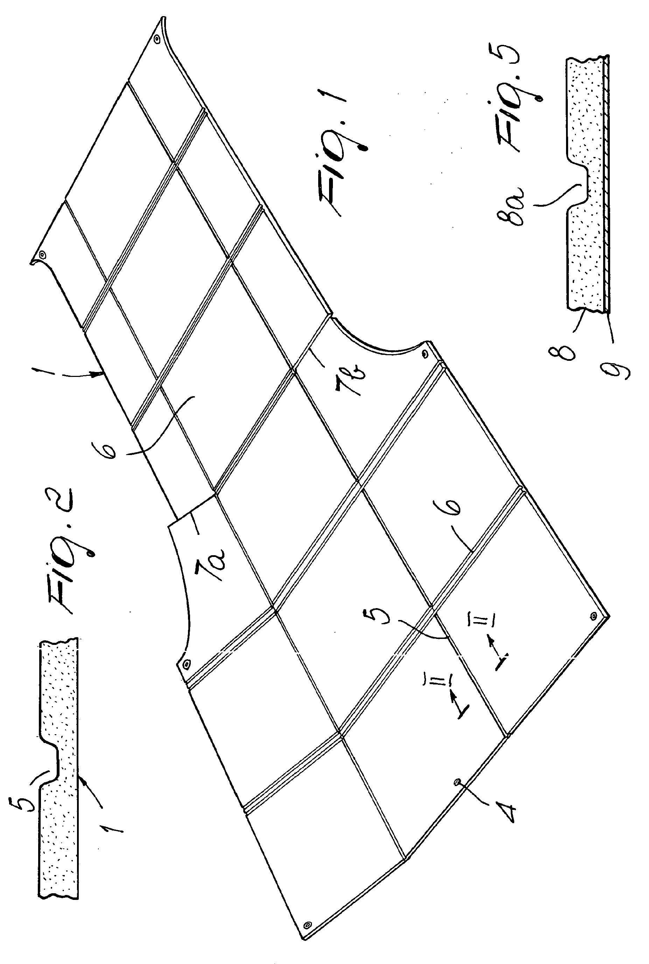

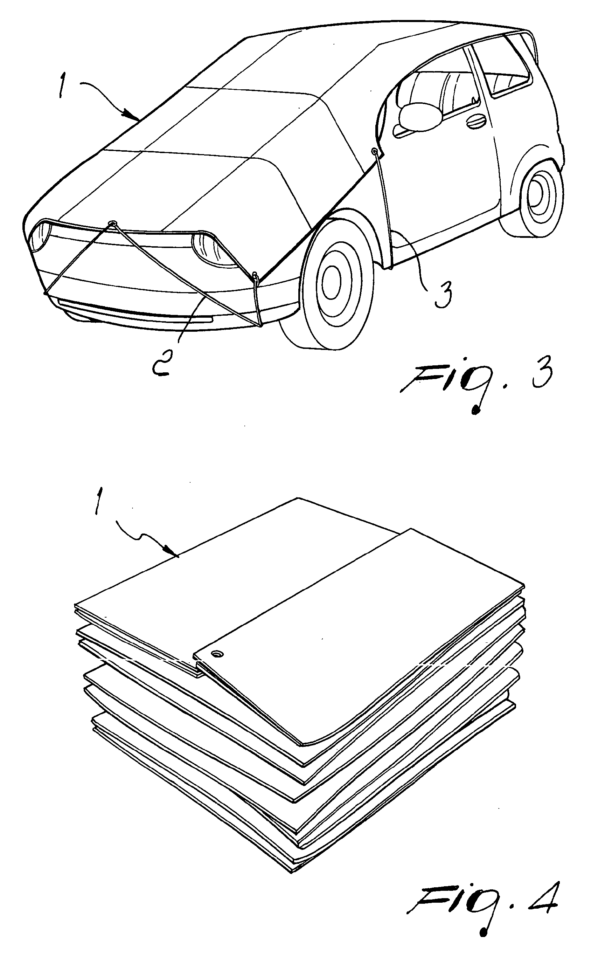

With reference to Figures 1 to 4, the reference numeral 1 designates a sheet made of a material having high impact absorption capacity, which has such shape and dimensions as to cover a car, as clearly shown in Figure 3; such sheet is provided with portions of cord 2 and 3, associated with eyelets 4, which are provided on the edge of said sheet and by means of which it is possible to fix the sheet to the car in a few seconds.

Advantageously, the sheet 1 is made of expanded polypropylene with a thickness which can range from 2 to 10 mm and with a density which can range from 35 to 135 kg/m³.

The sheet 1 is provided with creases which, in the two forms of simple creases 5 or double creases 6, are adapted to define sheet folding lines, so as to achieve a pack-like configuration thereof which allows its placement in the trunk of any car: this configuration is shown in Figure 4.

Finally, the reference numerals 7a, 7b designate two notches, which are provided at the ends of at least one crease 6 in order to facilitate handling of the sheet by a user.

From the above description it is therefore evident that the invention has excellent functional characteristics, and the fact is particularly important in that the cover according to the invention can be manufactured with an extremely simple industrial process.

Figure 5 illustrates a variation of the cover according to the invention, in which a thin and easily folding sheet 9, advantageously made of nylon and providing an increase in strength, is rigidly coupled at the continuous surface to a sheet 8, made of a material having high impact absorption capacity and provided with creases 8a.

The described invention is susceptible of numerous modifications and variations, all of which are within the scope of the appended claims; thus, for example, both the sheet 1 and the sheet 9 can be made of materials other than those indicated, and the shape of the creases may be any.

The disclosures in Italian Patent Application No. MN2005A000050 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A car cover, **characterized in that** it comprises a sheet (1;8) made of a material which has high impact absorption capacity and has such shape and dimensions as to cover a car when completely open, and is provided with creases (5,6;8) adapted to define folding lines in order to achieve a pack-like configuration of said sheet such as to allow to accommodate it in the trunk of a car, means (2,3,4) for quickly coupling said sheet (1;8) to said car being further provided.

2. The car cover according to claim 1, **characterized in that** the sheet (1) is made of expanded polypropylene, with a thickness which can range from 2 to 10 mm and with a density which can range from 35 to 135 kg/m³.

3. The car cover according to one or more of the preceding claims, **characterized in that** it comprises a combination of simple and double creases (5,6).

4. The car cover according to one or more of the preceding claims, **characterized by** the presence of a thin sheet (9) which can be folded easily and is rigidly coupled to the continuous surface of the sheet (8) provided with creases (8a).

5. The car cover according to claim 4, **characterized in that** the thin sheet (9) is made of nylon.

6. The car cover according to one or more of the preceding claims, **characterized by** the presence of notches (7a,7b) provided at the ends of at least one crease (5,6), which are adapted to facilitate the handling of the sheet by a user.
